# EUROPÄISCHE PATENTSCHRIFT

(11) **EP 0 760 253 B1**
(45) Veröffentlichungstag und Bekanntmachung des Hinweises auf die Patenterteilung: **06.05.1999**
(21) Anmeldenummer: 95810538.9
(22) Anmeldetag: 30.08.1995
(51) Int. Cl.: B01F 5/06, B29B 7/32

(54) **Statischer Mischer für zähe Fluide**
Static mixer for viscous fluids
Mélangeur statique pour fluides visqueux

(43) Veröffentlichungstag der Anmeldung: 05.03.1997
(73) Patentinhaber: Sulzer Chemtech AG, 8404 Winterthur (CH)
(72) Erfinder: Signer, Arno, CH-8542 Wiesendangen (CH)
(74) Vertreter: Heubeck, Bernhard

(56) Entgegenhaltungen:
- EP-A- 0 226 879
- CH-A- 642 564
- DE-A- 2 808 854
- GB-A- 2 020 987
- US-A- 4 643 584

## Beschreibung

Die Erfindung betrifft einen statischen Mischer für zähe Fluide, insbesondere für Kunststoffschmelzen, gemäss Oberbegriff von Anspruch 1. Die Erfindung bezieht sich auch auf ein Mischelement eines derartigen Mischers.

Ein solcher Mischer ist aus den Patentschriften CH-C-642 564 (= P.5473) oder DE-C-28 08 854 (= P.5285) bekannt. Dessen Mischelement weist eine Struktur auf, die sich aus ineinandergreifenden, sich kreuzenden Stegen aufbaut, wobei die Stege zwei Gruppen von parallel ausgerichteten Strukturelementen bilden.

Beim Mischen und Homogenisieren von Kunststoffschmelzen treten in der Regel grosse Druckgradienten in der Hauptströmungsrichtung auf. Mit diesen Druckgradienten sind Kräfte verbunden, die auf die Stege einwirken und die zur Zerstörung der Mischelemente führen können. Macht der Einsatz eines statischen Mischers eine grosse Widerstandskraft der Mischelemente erforderlich, so werden massive Mischerstrukturen verwendet, deren Stege einen im wesentlichen quadratischen Querschnitt aufweisen. Mit diesen Querschnitten sind - bei gleichem Durchsatz - die Druckgradienten zwar noch grösser als bei weniger massiven Mischelementen mit rechteckigen Stegquerschnitten; aber durch die Vergrösserung der Stegquerschnitte nimmt die Widerstandskraft stärker zu als die mit den erhöhten Druckgradienten verbundene Beanspruchung, so dass der Mischer der Beanspruchung standhalten kann. Es lässt sich also eine Verbesserung der Widerstandskraft durch den Bedarf eines höheren Energieeintrags sowie eines grösseren Materialaufwands für die Mischelemente erreichen.

Ungenügende Widerstandskraft wird besonders bei monolithischen Mischelementen beobachtet, die beispielsweise mittels Feingusses hergestellt sind.

Es ist Aufgabe der Erfindung, einen statischen Mischer mit monolithischen Mischelementen zu schaffen, der sich durch eine erhöhte Widerstandskraft auszeichnet, ohne dass die zur Verstärkung getroffenen Massnahmen einen wesentlichen Anstieg des Druckgradienten in dem zu mischenden Medium zur Folge haben. Diese Aufgabe wird durch einen statischen Mischer gelöst, der die in Anspruch 1 genannten Merkmale aufweist. Dank den erfindungsgemäss vorgesehenen Massnahmen ergibt sich eine erhöhte Widerstandskraft gegen Torsionskräfte, die an den Kreuzungsstellen der Stege aufgrund der Druckgradienten wirken und die bei bekannten statischen Mischern zum Bruch an diesen Stellen führen können. Dank diesen Massnahmen verringert sich auch der Materialbedarf.

Die abhängigen Ansprüche 2 bis 7 beziehen sich auf verschiedene Ausführungsformen des erfindungsgemässen Mischers. Die Ansprüche 8 bis 10 betreffen das Mischelement eines derartigen Mischers.

Nachfolgend wird die Erfindung anhand der Zeichnungen erläutert. Es zeigen:
- Fig. 1: einen Längsschnitt durch einen bekannten statischen Mischer,
- Fig. 2: eine Hilfsfigur zur Erläuterung der geometrischen Struktur eines Mischelements,
- Fig. 3: die geometrische Struktur eines Mischelements,
- Fig. 4: zwei sich an ihren Spitzen kreuzende Stege mit einer erfindungsgemässen Verdickung an der Kreuzungsstelle,
- Fig. 5: die Verdickung der Fig.4 ohne die Stege,
- Fig. 6: ein Segment der Verdickung der Fig.4,
- Fig. 7: drei sich kreuzende Stege mit segmentförmigen Verdickungen,
- Fig. 8: drei sich kreuzende Stege mit einer dritten Ausführungsform der Verdickungen und
- Fig. 9: drei sich kreuzende Stege mit einer vierten Ausführungsform der Verdickungen.

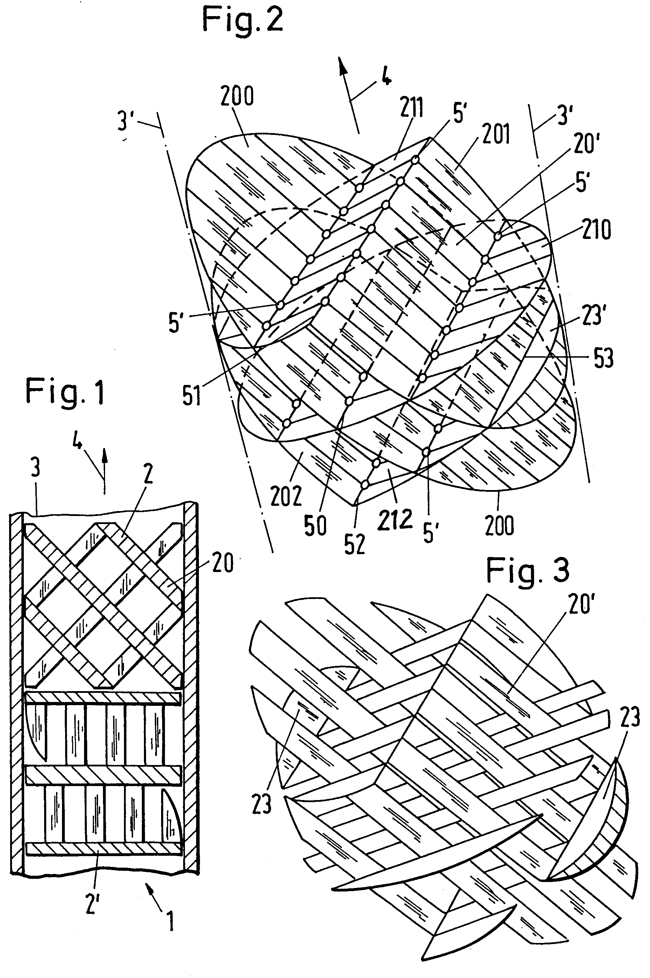

In Fig.1 ist ein bekannter statischer Mischer 1 für zähe Medien dargestellt. Er besteht aus einem Rohr 3 und zwei im Rohr angeordneten Mischelementen 2 und 2'. Durch das Rohr 3 ist die in Richtung der Rohrachse weisende Hauptfliessrichtung 4 des zu mischenden Fluids definiert. Das eine Mischelement 2 ist gegenüber dem anderen 2' um 90° um die Rohrachse 4 gedreht. Die Mischelemente 2, 2' sind als monolithische Strukturen - nämlich Gussteile - mit sich kreuzenden Stegen 20 ausgebildet. Die Stege 20 weisen rechteckige Querschnitte auf.

Anhand der Figuren 2 und 3 lässt sich der räumliche Aufbau eines Mischelements veranschaulichen: Den Stegen 20 und deren Zwischenräumen entsprechen Streifen 20' in Fig.2. Ein Teil dieser Streifen 20' spannen zwei sich in einer Linie 50 schneidende elliptische Flächen 200 und 210 auf. Weitere Streifen 20' bilden zwei elliptische Teilflächen 201 und 202, die parallel zu der Fläche 200 sind. Die übrigen Streifen 20' bilden zwei elliptische Teilflächen 211 und 212, die parallel zu der Fläche 210 sind. Die Kreuzungspunkte der Streifen 20' sind durch Knoten 5' markiert. Jedem zweiten Streifen 20' - siehe Fig.3 - entspricht ein Steg 20 des Mischelements.

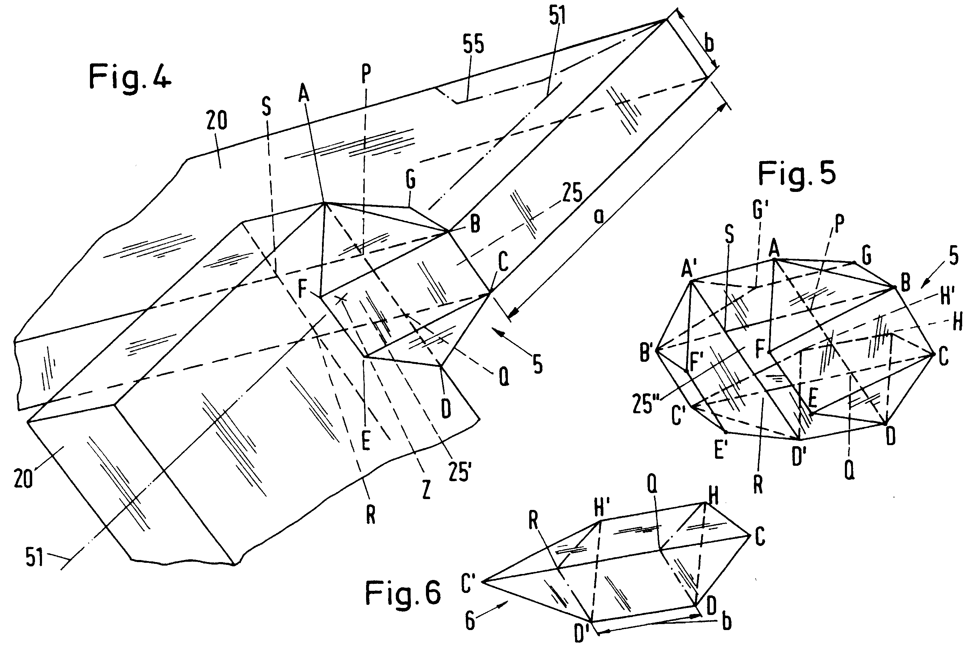

Den Knoten 5' in Fig.2 entsprechen im erfindungsgemässen Mischelement 2 verstärkende Verdickungen 5. In den Figuren 4 und 5 ist eine derartige Verdickung 5 für ein erstes Ausführungsbeispiel dargestellt. Fig.4 zeigt zwei Stege 20, die sich an ihren Spitzen kreuzen. Der Punkt Z liegt im Zentrum einer Kreuzungsstelle, die in Fig.2 einem Knoten 5' auf der Linie 51 (oder auf der Linie 52, wo die gleichen Verhältnisse vorliegen) zugeordnet ist. Die Stege 20 haben einen rechteckigen Querschnitt mit den Seiten a und b. An der Kreuzungsstelle bei Z liegt die von den Eckpunkten P, Q, R und S aufgespannte gemeinsame Grenzfläche 25' der verdickungsfreien Stege 20.

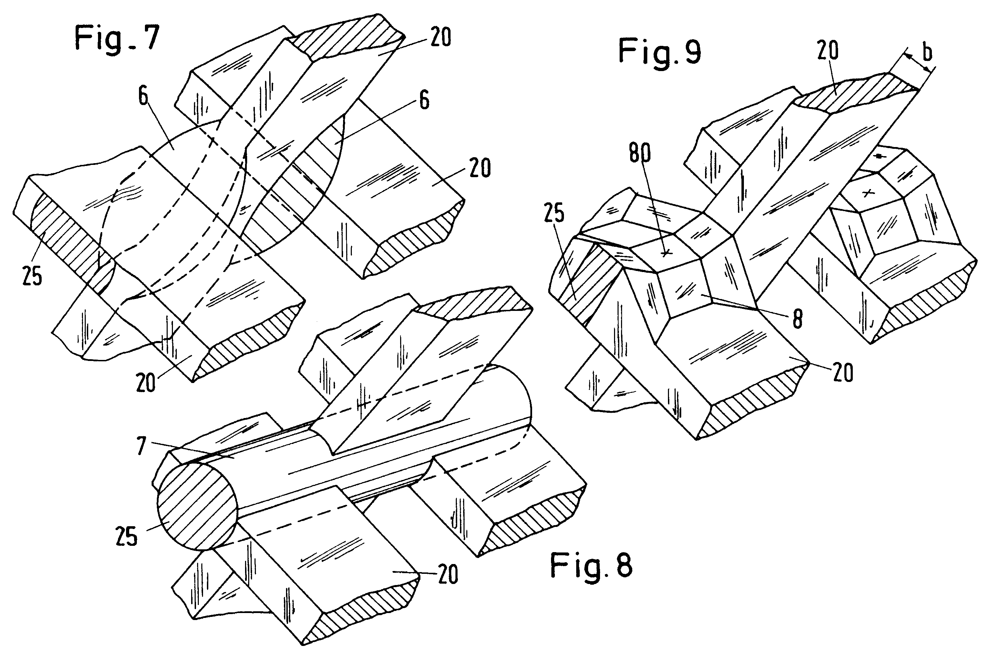

Von der Verdickung 5, die die Kreuzungsstelle Z ringförmig umgibt, sind in Fig.4 nur die Eckpunkte A, B, C, D, E, F sowie G sichtbar. Die ganze Verdickung - unter Weglassen der Stege 20 - ist in Fig.5 zu sehen. Zu den bereits genannten Eckpunkten treten dort in einer spiegelbildlichen Anordnung die Eckpunkte A', B', C', D', E', F' sowie G'. Anstelle der gemeinsamen Grenzfläche 25' zwischen den Stegen 20 liegt hier ein Durchbruch 25'' vor. Aufgrund der Verdickung 5 besteht zwischen den Stegen eine vergrösserte gemeinsame Grenzfläche, nämlich die Fläche 25 mit den Eckpunkten A, B, C, D, D', C', B' und A'. Die Verdickung 5 setzt sich - geometrisch gesehen - aus vier Segmenten 6 zusammen. Ein Segment 6 seinerseits setzt sich - siehe Fig.6 - aus einem Prisma mit den Eckpunkten D, D', R, H', H sowie Q und zwei Tetraedern mit den zusätzlichen Eckpunkten C bzw. C' zusammen.

Der strichpunktiert gezeichnete Linienzug 55 in Fig.4 gibt die Grenze der Verdickung an, mit der die weiter hinten liegende, zum Punkt Z benachbarte Kreuzungsstelle verstärkt ist.

Die Knotenpunkte 5' (Fig.2) im Innern des Mischelements - beispielsweise auf der Schnittlinie 50 - können auch mit den in Fig.5 dargestellten ringartigen Verdickungen 5 verstärkt werden. Bei der am Rand liegenden Knotenlinie 53 werden keine Verstärkungen und somit keine Verdickungen 5 benötigt.

Es ist in diesem Randbereich ein segmentförmiger Körper 23' vorgesehen. Ein entsprechender Teilkörper 23 des monolithischen Mischelements 2 (vgl. Fig.3) füllt im Mischer 1 eine Zone aus, in der bei bekannten Mischern das zu mischende Fluid eine beträchtlich längere Verweilzeit als im Mischerinnern aufweist. Ein derartiger Körper 23 ist daher vorteilhaft in Fällen, in denen ein enges Verweilzeitspektrum gewünscht wird.

In den drei weiteren Ausführungsbeispielen der Figuren 7 bis 9 sind jeweils drei sich kreuzende Stege 20 mit zwei Kreuzungsstellen dargestellt. In Fig.7 besteht die Verdickung einer Kreuzungsstelle aus zwei separaten Segmenten 6, deren eine Seitenfläche eine abgerundete Form aufweist. An der Seitenfläche des vorderen Stegs 20 ist die vergrösserte gemeinsame Grenzfläche 25 zwischen benachbarten Stegen angegeben.

Bei den Figuren 8 und 9 sind die Verdickungen benachbarter Kreuzungsstellen miteinander verbunden. Im Ausführungsbeispiel der Fig.8 sind diese Verdickungen jeweils Randbereiche eines zylindrischen Stabs 7. Der gezeigte Querschnitt 25 dieses Stabs 7 entspricht der vergrösserten gemeinsamen Grenzfläche zwischen benachbarten Stegen 20. Der Stab 7 kann auch prismatisch ausgebildet sein, so dass der Querschnitt 25 die Form eines Vielecks aufweist.

Das vierte Ausführungsbeispiel in Fig.9 zeigt eine Verdickung 8, die nur auf einer Seite des Stegs angeordnet ist. Selbstverständlich lässt sich eine zweite, entsprechende Verdickung ebenfalls auf der anderen Seite vorsehen. Die Verdickung 8 kann auch eine abgerundete Form aufweisen, so dass beispielsweise die Stelle 80 ein Sattelpunkt ist. Die gemeinsame Grenzfläche 25 ist hier ungefährt doppelt so gross wie die gemeinsame Grenzfläche (= b²) der verdickungsfreien Stege 20.

Die Lehre der vorliegenden Erfindung lässt sich selbstverständlich auch auf Mischer mit sich kreuzenden Stegen übertragen, die nicht den besonderen in den Figuren 1 bis 3 dargestellten Aufbau haben. Beispielsweise kann die Anzahl der parallelen Flächen 200, 201 und 202 grösser und/oder die Anzahl der Stege 20 pro Fläche kleiner sein.

In der Regel sind die monolithischen Mischelemente Feingussteile. Sie können aber auch mittels eines Metallpulverspritzguss-Verfahrens hergestellt werden. Bei diesem Verfahren wird aus einem Gemisch von Metallpulver und organischen Stoffen ein Grünteil mittels Spritzgusses hergestellt. Anschliessend werden die organischen Stoffe weitgehend thermisch entfernt und das Grünteil, in der die metallischen Komponenten weiterhin aneinander haften, zu einer Endform dichtgesintert.

## Patentansprüche

1. Statischer Mischer (1) für zähe Medien, welcher ein Rohr (3) und mindestens ein im Rohr angeordnetes Mischelement (2) umfasst, wobei das Rohr eine Hauptfliessrichtung (4) des zu mischenden Fluids definiert, das Mischelement als eine monolithische Struktur mit sich kreuzenden Stegen (20) ausgebildet ist und die Stege jeweils einen im wesentlichen rechteckigen Querschnitt mit einer grossen bzw. kleinen Seite (a, b) aufweisen,
dadurch gekennzeichnet, dass Kreuzungsstellen der Stege durch lokale Verdickungen (5; 6; 7; 8) verstärkt sind, aufgrund derer eine gemeinsame Grenzfläche (25) zwischen den Stegen, die parallel zur Hauptfliessrichtung liegt, mindestens rund doppelt so gross ist wie die durch die kleine Seite (b) gebildete Quadratfläche (25'), wobei die Verdickungen für alle Kreuzungsstellen vorgesehen sind, allenfalls mit Ausnahme von jenen, die in einem rohrnahen Randbereich des Mischelements angeordnet sind.

2. Statischer Mischer nach Anspruch 1, dadurch gekennzeichnet, dass die Verdickungen durch zusätzliches Material gebildet sind, das an den Kreuzungsstellen jeweils mindestens einen Eckbereich zwischen den Stegen ausfüllt.

3. Statischer Mischer nach Anspruch 1 oder 2, dadurch gekennzeichnet, dass im genannten Randbereich des Mischelements ein segmentförmiger Körper (23) vorgesehen ist.

4. Statischer Mischer nach einem der Ansprüche 1 bis 3, dadurch gekennzeichnet, dass die Verdickungen jeweils ringartig, die Kreuzungsstelle umschliessend ausgebildet sind.

5. Statischer Mischer nach einem der Ansprüche 1 bis 3, dadurch gekennzeichnet, dass Verdickungen, die benachbarten Kreuzungsstellen zugeordnet sind und auf Geraden senkrecht zur Hauptfliessrichtung liegen, miteinander verbunden sind.

6. Statischer Mischer nach Anspruch 5, dadurch gekennzeichnet, dass die miteinander verbundenen Verdickungen jeweils Randbereiche eines zylindrischen oder prismatischen Stabs bilden.

7. Statischer Mischer nach einem der Ansprüche 1 bis 3, dadurch gekennzeichnet, dass zumindest einige der Verdickungen jeweils ein Segment oder zwei separate Segmente umfassen.

8. Mischelement zu einem statischen Mischer gemäss einem der Ansprüche 1 bis 7.

9. Mischelement nach Anspruch 8, dadurch gekennzeichnet, dass es ein Feingussteil ist.

10. Mischelement nach Anspruch 8, dadurch gekennzeichnet, dass es ein monolithisches Teil ist, das mittels Metallpulverspritzgusses hergestellt ist.

## Claims

1. Static mixer (1) for viscous media which comprises a tube (3) and at least one mixing element (2) arranged in the tube, wherein the tube defines a main flow direction (4) of the fluid to be mixed, the mixing element is formed as a monolithic structure with bars (20) crossing one another and the bars each have an essentially rectangular cross section with a large and a small side (a, b), characterised in that crossing points of the bars are reinforced by local thickened portions (5; 6; 7; 8) as a result of which a common boundary surface (25) between the bars which lies parallel to the main flow direction is at least approx. twice as large as the square area (25') formed by the small side (b), wherein the thickened portions are provided for all crossing points, at most with the exception of those which are arranged in a marginal region of the mixing element close to the tube.

2. Static mixer in accordance with claim 1 characterised in that the thickened portions are formed by additional material which fills out at least one corner region between the bars at each of the crossing points.

3. Static mixer in accordance with claim 1 or 2 characterised in that a segment-like body (23) is provided in the said marginal region of the mixing element.

4. Static mixer in accordance with one of the claims 1 to 3 characterised in that the thickened portions are each formed in ring-like manner encompassing the crossing points.

5. Static mixer in accordance with one of the claims 1 to 3 characterised in that thickened portions which are associated with neighbouring crossing points and lie on straight lines perpendicular to the main flow direction are connected to one another.

6. Static mixer in accordance with claim 5 characterised in that the thickened portions connected to one another each form marginal regions of a cylindrical or prismatic rod.

7. Static mixer in accordance with one of the claims 1 to 3 characterised in that at least some of the thickened portions each encompass one segment or two separate segments.

8. Mixing element for a static mixer in accordance with one of the claims 1 to 7.

9. Mixing element in accordance with claim 8 characterised in that it is a precision casting.

10. Mixing element in accordance with claim 8 characterised in that it is a monolithic part which is manufactured by means of metal powder injection moulding.

## Revendications

1. Mélangeur statique (1) pour des milieux visqueux, qui comporte un tube (3) et au moins un élément de mélange (2) disposé dans le tube, le tube définissant une direction d'écoulement principale (4) du fluide à mélanger, où l'élément de mélange est réalisé sous forme de structure monolithe avec des barrettes (20) qui se croisent et où les barrettes ont respectivement une section transversale sensiblement rectangulaire avec un grand respectivement un petit côté (a, b), caractérisé en ce que les emplacements de croisement des barrettes sont renforcés par des épaississements locaux (5 ; 6 ; 7 ; 8), en raison desquels une face limite commune (25) entre les barrettes, qui se situe parallèlement à la direction d'écoulement principale, fait au moins à peu près le double que la surface carrée (25') formée par le petit côté, les épaississements étant prévus pour tous les emplacements de croisement, tout au plus à l'exception de ceux qui sont disposés dans une zone de bord proche du tube de l'élément de mélange.

2. Mélangeur statique selon la revendication 1, caractérisé en ce que les épaississements sont formés par du matériau additionnel qui remplit aux emplacements de croisement respectivement au moins une zone angulaire entre les barrettes.

3. Mélangeur statique selon la revendication 1 ou 2, caractérisé en ce qu'il est prévu dans la zone de bord précitée de l'élément de mélange un corps (23) en forme de segment.

4. Mélangeur statique selon l'une des revendications 1 à 3, caractérisé en ce que les épaississements sont réalisés respectivement en une forme annulaire, en entourant l'emplacement de croisement.

5. Mélangeur statique selon l'une des revendications 1 à 3, caractérisé en ce que les épaississements qui sont associés aux emplacements de croisement avoisinants et qui se situent sur des lignes droites perpendiculaires à la direction d'écoulement principale, sont reliés les uns aux autres.

6. Mélangeur statique selon la revendication 5, caractérisé en ce que les épaississements reliés les uns aux autres forment respectivement des zones de bord d'une tige cylindrique ou prismatique.

7. Mélangeur statique selon l'une des revendications 1 à 3, caractérisé en ce qu'au moins quelques-uns des épaississements comprennent respectivement un segment ou deux segments séparés.

8. Elément de mélange pour un mélangeur statique selon l'une des revendications 1 à 7.

9. Elément de mélange selon la revendication 8, caractérisé en ce que celui-ci est une pièce de coulée de précision.

10. Elément de mélange selon la revendication 8, caractérisé en ce que celui-ci est une pièce monolithe qui est fabriquée par moulage par transfert de poudres métalliques.
